Europäisches Patentamt

European Patent Office

Office européen des brevets

(19)

(11) Publication number : **0 484 061 A1**

(12) **EUROPEAN PATENT APPLICATION**

(21) Application number : **91309875.2**

(22) Date of filing : **25.10.91**

(51) Int. Cl.$^5$ : **C11D 3/37, C09K 3/32**

(30) Priority : **01.11.90 GB 9023801**

(43) Date of publication of application :
**06.05.92 Bulletin 92/19**

(84) Designated Contracting States :
**DE DK ES FR GB GR IT NL SE**

(71) Applicant : **THE BRITISH PETROLEUM COMPANY P.L.C.**
**Britannic House, 1 Finsbury Circus**
**London EC2M 7BA (GB)**

(71) Applicant : **BP Chemicals Limited**
**Belgrave House 76 Buckingham Palace Road**
**London, SW1W 0SU (GB)**

(72) Inventor : **Dye, Charles John, BP Chemicals Limited**
**Salt End**
**Hull, HU12 8DS (GB)**
Inventor : **Shaw, Geraldine Anne Maria, BP Chemicals Limited**
**Belgrave House, 76 Buckingham Palace Road**
**London, SW1W 0SU (GB)**
Inventor : **Smethills, Tracey Maria,**
**The British Petroleum Co. P.L.C., Chertsey Road**
**Sunbury-on-Thames, Middlesex, TW16 7LN (GB)**

(74) Representative : **Krishnan, Suryanarayana Kalyana et al**
**BP INTERNATIONAL LIMITED Patents & Agreements Division Chertsey Road**
**Sunbury-on-Thames Middlesex TW16 7LN (GB)**

(54) **Cleaning compositions.**

(57)  This invention relates to a water-soluble liquid cleaning composition which is a homogeneous solution of (a) a 20-90%w/w of an aliphaticether alcohol, (b) an aqueous solution of at least 2%w/w of an ionisable alkali or an alkaline earth metal salt, and (c) 0.005-0.2%w/w of a polyoxyalkylene oxide or glycol having an Mw of at least 4000. The total amount of water in the cleaning composition is from 80-5%w/w corresponding to the component (a) above. The composition is useful of cleaning oil adherent to rock or drill cuttings.

EP 0 484 061 A1

The present invention relates to a surface cleaning composition for removing oil adherent to substrate surfaces e.g. oil containing sludge, oil contaminated bottles, oil contaminated earth, rock/drill cuttings and shales, produced during drilling operations for oil.

Rock/drill cuttings are produced during normal drilling operations. The drilling fluids used in these operations normally carry these cuttings away from the drill bit up the annulus, between the drill pipe and the bore hole to the mud line and then to the drilling platform. If rock/drill cuttings are not removed, periodically at least, they will build up in the drilling mud closed loop to the detriment of the drilling process as a whole. Thus, it is conventional to install a solids control system as part of this loop. When the fine colloidal solids build up in the mud they are generally removed by centrifugation. In certain geographical areas cuttings removed from the mud system are washed to reduce their oil content prior to disposal. Current techniques include base oil dilution followed by centrifugation and aqueous surfactant washing.

The main requirement of any process for cleaning surfaces such as those of, e.g. rock/drill cuttings is that it significantly reduces the amount of oil associated with the surface, e.g. cuttings being discharged into the environment e.g. sea, along with the effluents from the process. Under current UK legislation such discharges must not contain more than 150g/kg of dry cuttings in the residue. It is preferable to reduce this limit further, e.g. to 100g/kg of dry cuttings in order to not only minimise pollution risks but also meet projected legislation setting this amount at 60g/kg and at a later date 10g/kg as the maximum permissible limit.

It has now been found that by using a specific composition for cleaning oil contaminated substrate surfaces, the oil contaminant on the substrate surface can be reduced significantly.

Accordingly, the present invention is a water soluble liquid cleaning composition, said composition comprising a homogeneous solution of:

(a) 20-95%w/w of an aliphaticether alcohol,

(b) an aqueous solution of at least 2%w/w of an ionisable salt selected from an alkali metal carboxylate and an alkali metal or alkaline earth metal halide, and

(c) 0.005-0.2%w/w of a polyoxyalkylene oxide or glycol having a a weight average molecular weight of at least 4000, such that of the total amount water inclusive of that in the aqueous solution in (b) above in the composition is correspondingly from 80-5%w/w.

The aliphatic ether alcohol has a generic formula

$$R'O(RO)_nH$$

wherein R is a $C_1$-$C_4$ alkylene group and R' is a $C_1$-$C_4$ alkyl group, and n has a value from 1 to 4.

Specific examples of the ether alcohols include 2-butoxy ethanol, methoxypropoxy propanol (hereafter referred to as "MPP"), ethoxypropoxy propanol (hereafter referred to as "EDP") and butoxyethoxy ethanol (hereafter referred to as "BDGE"), and BDGE is particularly preferred.

The ether alcohol is present in the homogeneous composition in an amount of at least 30%w/w of the total composition, suitably at least 60%w/w, preferably from 80-90%w/w e.g. 85%w/w.

The ionisable salts that are present in the homogeneous composition are selected from alkali metal carboxylates and halides, suitably the $C_1$-$C_4$ fatty acid salts or chlorides of the alkali metals, preferably potassium formate, potassium acetate, sodium chloride, sodium acetate, potassium chloride and calcium chloride.

These ionisable salts are present in the aqueous solution used to form the homogeneous composition in an amount of at least 2%w/w of the aqueous solution, suitably at least 3%w/w, preferably at least 5%w/w. It has been observed that aqueous solutions containing more than 10%w/w of the ionisable salt have no significant beneficial effect over those containing relatively lower concentrations of the salt. These aqueous solutions may be in the form of sea water inherently containing the desired salts.

The presence of a polyoxyalkylene oxide or glycol in the homogeneous compositions of the present invention is a significant feature which distinguishes this invention over the prior art. As is apparent from the above, the polyoxyalkylene oxide or glycol used has to be soluble in the composition in order to generate a homogeneous composition. With this proviso, the polyoxyalkylene oxides or glycols may be homopolymers, block polymers, random copolymers of more than one alkylene oxide or glycol or blends of two or more polyoxyalkylene oxides or glycols. These perform the essential function of flocculating fines when cleaning substrates contaminated with oil. This is particularly the case when cleaning drill or rock cuttings, shales and drilling muds for otherwise, the cleaning composition gets very viscous due to contamination by the fines and recycle of the composition for repeated use becomes practically impossible. The presence of a polyoxyalkylene oxide or glycol in small amounts aids flocculation and separation of such fines thereby enabling the use of the homogeneous composition much more efficiently.

A further feature of the present invention is that the cleaning composition entraining the contaminant oil is readily separated from the cleaned substrates, e.g. drill/rock cuttings and/or shales by simple filtration and the contaminant oil entrained in the cleaning composition is recovered as the filtrate. The entrained oil in the filtrate is separated from the composition simply by allowing the filtrate to undergo phase separation into aqueous and/or oil phases. In some cases where some small fines are transferred into the filtrate, it may be necessary to centrifuge the filtrate to aid separation and removal of such trace quantities of fines from the filtrate prior to phase separation. The aqueous phase in the filtrate which is the liquid cleaning composition is thereafter simply removed and recycled to treat the next contaminated batch of the substrate. In some cases it may also be necessary to supplement the cleaning composition so recovered to be supplemented with the components due to the inevitable loss of some small proportion e.g. 10% of the components due to the effect of partitioning on the solids. This can readily be achieved by making up the cleaning composition to its original volume by further addition of a fresh aliquot of the cleaning composition. In fact, the liquid compositions of the present invention can be recycled over 30 times for cleaning e.g. drilling muds contaminated with oil. Moreover, the separated oil phase, apart from preventing environmental pollution, improves the economics of the oil recovery process.

The polyoxyalkylene oxide or glycol (hereafter referred to as "PAO" or "PAG" respectively) is preferably a polyoxyethylene oxide or glycol (hereafter referred to as "PEO" or "PEG" respectively) and has a weight average molecular weight ("Mw") of at least 4000, suitably greater than 100,000, preferably greater than 300,000.

The PAO or PAG is suitably present in the homogeneous composition in an amount less than 0.2%w/w of the total composition.

The homogeneous composition is prepared by thoroughly mixing the components (a), (b) and (c) by known methods.

The substrate to be cleaned e.g. oil contaminated drill/rock cuttings are intimately mixed with the homogeneous composition of the present invention and mixed vigorously for a few minutes, using a stirring device if necessary, and filtered. The filtrate comprises the cleaning composition entraining the contaminant oil. The residual solid cuttings substantially free of the contaminant oil and the cleaning composition is then analysed for oil content.

By using the homogeneous cleaning compositions of the present invention, it is possible to readily reduce the oil content of the substrates treated to below 80g/kg (i.e. 8%w/w) and often below 50g/kg (i.e. 5%w/w) of the cuttings treated.

A further feature of the homogeneous compositions of the present invention is that the treatment of contaminated substrates is normally carried out at ambient temperatures, in any case not more than 55°C, thereby reducing the overall cost of the process.

Thus according to a further embodiment, the present invention is a process for removing oil from substrate surfaces contaminated therewith said process comprising:

A. applying to the substrate surface a homogeneous liquid cleaning composition comprising:

(a) 20-95%w/w of an aliphaticether alcohol
(b) an aqueous solution of at least 2%w/w of an ionisable salt selected from an alkali metal carboxylate and an alkali metal or an alkaline earth metal halide, and
(c) 0.005-0.2%w/w of a polyoxyalkylene oxide or glycol having an Mw of at least 4000
such that the total amount of water inclusive of that in the aqueous solution (b) above in the composition is correspondingly from 80-5%w/w,

B. separating the liquid composition now entraining the oil contaminant from the treated substrate, and
C. separating the entrained oil from the liquid cleaning composition by phase separation.

The cleaning composition freed from the contaminant oil in step (C) above may contain small amounts of the contaminant oil due to partitioning effects during the phase separation stages. However, such a composition can be recycled with or without further separation stages for cleaning a further batch of oil contaminated substrate surfaces and where necessary may have to be supplemented with further aliquots of the fresh cleaning composition to make it up to the original composition and volume. Performance of the cleaning compositions of the present invention can also be improved by multiple washing of the same batch with the cleaning composition of the present invention. Use of pressure filtration is preferred to separate the contaminant oil and the cleaning composition from the solid substrate.

The treated substrate surface can be washed, if desired, with water to render it free of any adherent cleaning composition and then dried. This washing step is not normally necessary.

The homogeneous compositions of the present invention can be used on a commercial scale for cleaning substrates such as oil containing sludge, oil contaminated bottles and oil contaminated earth.

The liquid homogeneous cleaning compositions of the present invention have additional advantages in that they:

(a) displace but do not emulsify to any substantial extent the oil removed from the contaminated surface,
(b) enable the separated oil to be easily skimmed or decanted off from the liquid phase and enable the composition to be reused to treat a fresh sample of contaminated surface,
(c) enable any residual composition on the deoiled surface to be washed off by water in which the composition, unlike the oil contaminant, is soluble and

(d) enable a significantly high proportion of the oil to be removed from the contaminated substrate when compared with conventional cleansing agents.

The present invention is further illustrated with reference to the following Examples.

The following abbreviations have been used in the process description below:

Potassium Acetate          KAc

Butoxyethoxy ethanol        BDGE

K9P - It is a basic cleaning composition containing 90%w/w BDGE and 10%w/w of a 5%w/w aqueous solution of KAc.

Centrate - It is the liquid fraction remaining after centrifugation of the filtrate containing the cleaning composition and the entrained oil separated from the cuttings but prior to the phase separation into aqueous and oil phases.

PEO 4,000,000 - Polyoxyethylene oxide of Mw 4,000,000.

PEG 200 - Polyoxyethylene glycol of Mw 200.

All the runs were carried out at ambient temperature.

## Operation and results

The general procedure adopted for washing the drill cuttings with the cleaning formulations was as follows:

The cuttings were washed for 1-10 minutes with the cleaning formulation indicated in the various Examples. The washing vessel used was either a rotating drum or a paddle stirred container.

The cuttings and cleaning formulation were passed on to an oilfield shale shaker (which is a vibrating device with a 300 mm screendeck, ex Thomas Broadbent & Sons Ltd, UK) in order to enable separation of a major proportion of the solids (about 70%) from the cleaning formulation.

The cleaning formulation, oil and fines were then passed to a 150 mm heavy duty decanter centrifuge. In this step the relatively coarser fines were removed (ca 28% of total feed) and the remaining liquid component, the so called "centrate", contained oil, the cleaning formulation and ultra-fine solids.

The centrate was passed to a Hopkinson disc bowl centrifuge in order to separate the ultra-fine solids, oil and the cleaning formulations from each other. The equipment used had the following parameter:

```
Shale Shaker 'G' force employed        4 approx.

Width of screen area                   275 mm

Top deck screen size                   20 mesh

Bottom deck screen size                84 mesh

Decanter centrifuge speed              4000 rpm

'G' force                              1350

Gear ratio                             100:1

Pool depth                             12 mm

Feed rate                              8 litres/min

Disc bowl centrifuge speed             10500 rpm

'G' force                              4000

Clarifying disc numer                  7
```

The cleaning conditions for each run are detailed in Table 1 and the retort results are shown in Table 2. Analysis of significant centrate is shown in Table 3. Experimental observations were as follows:-

## Baseline Run K9P

The feed line to the shaker blocked probably due to the unusually coarse $12\frac{1}{4}$" cuttings, which on the shaker appeared to be sticky with a coating of fines. They seemed to stick together and the lower screen had negligible solids. There were fewer fines in the underflow cleaner but the centrate liquor was not as clear.

### RUN 1-K9P+PEG 200

For this run the cleaner to cuttings ratio was also 2:1 and the mixture was poured onto the top screen. The cuttings again looked oily and no solids were observed on the lower screen. Fines in the underflow and centrate showed no reduction on the baseline Run.

### RUN 2-K9P+PEO 4,000,000

This fines suppressant had a dramatic effect. The cuttings stuck together even more and there was an increase in fine sludge, which passed onto the lower mesh. Blinding of the bottom screen occured, which took some minutes to clear. The underflow from the shaker contained only a trace of solids and the centrate was clear.

### RUN 3-K9P+PEO 4,000,000

On repeating Run 2, a similar result was achieved, apart from slightly worse blinding of the bottom screen, again probably due to the stickiness of the cuttings.

### RUN 4-K9P+PEO 4,000,000

Run 3 recovered cleaner was added to Run 2 recovered cleaner to make up to the required volume to carry out a recycle run. The cuttings seemed less sticky than in the initial run, but again, blinding of the lower screen was noted and no solids were carried off the screen. The underflow and centrate liquors, both showed a serious deterioration on the initial run, although they were significantly better than the initial baseline Run.

### RUN 5-K9P+PEO 4,000,000

A second recycle run was carried out using recovered Run 4 cleaner again made up with recovered Run 2 material. No fines suppression was apparent, with the underflow and centrate liquors both containing solids levels similar to the K9P baseline. The cuttings were also very much alike apart from the fines, which again blinded the bottom mesh.

### RUN 6-K9P+PEO 4,000,000

Addition of 5%w/w of the PEG4,000,000/KAC concentrate to the used Run 5 cleaner immediately flocculated the suspended solids. Although this addition also had the effect of altering the BDGE/$H_2O$ ratio it was decided to perform this addition to test the possibility of regenerating the cleaner. The cuttings looked a little different to the previous run. The underflow was high in solids, which may have been at least partially due to washing of the shaker screens before the start of the run. The centrate was greatly improved, but the solids present floated on top of the liquor.

Table 1

| Run | Cleaner | Approximate Cleaner/Cuttings Ratio (v/v) |
|---|---|---|
| Baseline | K9P | 2:1 |
| 1 | K9P+1.0%w/w PEG 200 | 2:1 |
| 2 | K9P+0.03%w/w PEO 4,000,000 | 2:1 |
| 3 | K9P+0.03%w/w PEO 4,000,000 | 2:1 |
| 4 | 1st. Recycle of Run 5 | 2:1 |
| 5 | 2nd. Recycle of Run 5 | 2:1 |
| 6 | *3rd. Recycle+0.015%w/w PEG 4,000,000 | 2:1 |

*The PEO 4,000,000 was dissolved in the standard 5%w/w aqueous KAC solution used in K9P and therefore the PEO addition changed the BDGE/$H_2O$ ratio from 90:10 to 85:15%w/w.

Table 2

Retort Analysis

| Run | %w/w Oil (on dry cuttings) | %w/w Lower Phase (on dry cuttings) | %w/w Total Moisture (on wet cuttings) |
|---|---|---|---|
| Initial | 8.45 | 17.79 | 20.43 |
| Baseline | 3.02 | 24.87 | 21.23 |
| 1 | 2.47 | 18.11 | 15.37 |
| 2 | 1.96 | 34.86 | 26.34 |
| 3 | 2.99 | 37.74 | 28.11 |
| 4 | 4.00 | 33.10 | 26.11 |
| 5 | 7.24 | 25.15 | 23.58 |
| 6 | 4.62 | 25.89 | 22.71 |

Table 3

Quantitative Analysis

| Run | Sample | %w/w Oil | %w/w BDGE | %w/w Water |
|---|---|---|---|---|
| 3 | Centrate | 0.6 | 85.4 | 14.0 |
| 4 | Centrate | 2.3 | 84.3 | 13.4 |
| 5 | Centrate | 2.9 | 82.4 | 14.7 |
| 6 | Centrate | - | - | 28.2 |

## Claims

1. A water-soluble liquid cleaning composition, said composition comprising a homogeneous solution of:
   a) 20-95%w/w of an aliphatic ether alcohol,
   b) an aqueous solution of at least 2%w/w of an ionisable salt selected from an alkali metal carboxylate and an alkali metal or alkaline earth metal halide, and

c) 0.005-0.2%w/w of a polyoxyalkylene oxide or glycol having a weight average molecular weight (Mw) of at least 4000,
such that the total amount of water inclusive of that in the aqueous solution in (b) above in the composition is correspondingly from 80-5%w/w.

2. A cleaning composition according to Claim 1 wherein the aliphaticether alcohol has a general formula $R'O(RO)_nH$ wherein R is a $C_1$-$C_4$ alkylene group and R' is a $C_1$-$C_4$ alkyl group, and n has a value from 1 to 4.

3. A cleaning composition according to Claim 1 or 2 wherein the ether alcohol is selected from 2-ethoxy butanol, methoxypropoxy propanol, ethoxypropoxy propanol and butoxyethoxy ethanol.

4. A cleaning composition according to any one of the preceding Claims wherein the ether alcohol is present in an amount of at least 30%w/w of the total composition.

5. A cleaning composition according to any one of the preceding Claims wherein the ionisable salt is a $C_1$-$C_4$ fatty acid salt or chloride of an alkali metal or an alkaline earth metal.

6. A cleaning composition according to Claim 5 wherein the ionisable salt is selcted from potassium formate, potassium acetate, sodium chloride, sodium acetate, potassium chloride and calcium chloride.

7. A cleaning composition according to any one of the preceding Claims wherein the ionisable salt is present in an amount of at least 3%w/w of the aqueous solution in (b) above.

8. A cleaning composition according to any one of the preceding Claims wherein the aqueous solution of an ionisable salt in (b) above is sea water.

9. A cleaning composition according to any one of the preceding Claims wherein the polyoxyalkylene oxide or glycol is a homopolymer, a block or random copolymer of one or more alkylene oxides, or a blend of two or more polyoxyalkylene oxides or glycols.

10. A cleaning composition according to any one of the preceding Claims wherein the polyoxyalkylene oxide or glycol is a polyoxyethylene oxide or glycol.

11. A cleaning composition according to any one of the preceding Claims wherein the polyoxyalkylene oxide or glycol has a weight average molecular weight, Mw, greater than 100,000.

12. A process for removing oil from substrate surfaces contaminated therewith said process comprising:
A) applying to the substrate surface a water-soluble homogeneous liquid cleaning composition comprising:
a) 20-95%w/w of an aliphaticether alcohol
b) an aqueous solution of at least 2%w/w of an ionisable salt selected from an alkali metal carboxylate and an alkali metal or an alkaline earth metal halide, and
c) 0.005-0.2%w/w of a polyoxyalkylene oxide or glycol having a weight average molecular weight (Mw) of at least 4000 such that the total amount of water inclusive of that in the aqueous solution in (b) above in the composition is correspondingly 80-5%w/w,
B) separating the liquid composition now entraining the oil contaminant from the treated substrate, and
C) separating the entrained oil from the liquid cleaning composition by phase separation.

13. A process according to Claim 12 wherein the oil is removed from a substrate surface contaminated therewith by multiple application of said cleaning composition on the contaminated substrate surface.

14. A process according to Claim 12 or 13 wherein the step (B) to separate the liquid composition entraining the oil contaminant from the treated substrate is carried out by pressure filtration.

EP 0 484 061 A1

European Patent Office

**EUROPEAN SEARCH REPORT**

Application Number

EP 91 30 9875

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | EP-A-0 330 379 (BRITISH PETROLEUM) | 1-11 | C11D3/37 |
| A | * page 2, line 1 - page 3, line 18; examples * | 12-14 | C09K3/32 |
| | --- | | |
| Y | US-A-4 284 534 (J.R. EHRLICH) | 1-11 | |
| | * claim 1; examples * | | |
| | --- | | |
| A | US-A-4 645 608 (J.J. RAYBORN) | 12-14 | |
| | * the whole document * | | |
| | ----- | | |
| | | | **TECHNICAL FIELDS SEARCHED (Int. Cl.5 )** |
| | | | C11D |
| | | | C09K |

The present search report has been drawn up for all claims

| Place of search | Date of completion of the search | Examiner |
|---|---|---|
| THE HAGUE | 22 JANUARY 1992 | GRITTERN A.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P0401)

8